Europäisches Patentamt

European Patent Office

Office européen des brevets

(11) Publication number: **0 160 927**
**B1**

(12) **EUROPEAN PATENT SPECIFICATION**

(45) Date of publication of patent specification: **27.06.90**

(21) Application number: **85105301.7**

(22) Date of filing: **01.05.85**

(51) Int. Cl.⁵: **B 60 N 2/22, A 47 C 5/12**

(54) **Backrest for automobile vehicle seats and method for the manufacture thereof.**

(30) Priority: **09.05.84 IT 6746784**

(43) Date of publication of application:
**13.11.85 Bulletin 85/46**

(45) Publication of the grant of the patent:
**27.06.90 Bulletin 90/26**

(84) Designated Contracting States:
**BE DE FR GB SE**

(56) References cited:
**DE-A-2 723 722**
**FR-A-2 122 061**
**FR-A-2 482 255**
**GB-A-1 140 157**
**GB-A-1 224 363**
**GB-A-1 360 241**
**US-A-3 441 310**
**US-A-3 848 925**

(73) Proprietor: **FIAT AUTO S.p.A.**
**Corso Giovanni Agnelli 200**
**I-10135 Torino (IT)**

(72) Inventor: **Noris, Claudio**
**Corso G. Ferraris 137**
**I-10128 Torino (IT)**

(74) Representative: **Jacobacci, Guido et al**
**Jacobacci-Casetta & Perani S.n.c. Via Alfieri 17**
**I-10121 Torino (IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a backrest for automobile vehicle seats and to a method for the manufacture thereof.

Modern automobile vehicle seats are usually comprised of a base having a padded covering and whereto a backrest is articulated by means of an inclination angle adjusting mechanism, which backrest comprises a rigid frame having a padded covering. Hitherto, the frame has been invariably constructed from metal tubing or sheet metal and with lugs, reinforcements and connection brackets which were welded or bolted to the main structure.

It has previously been impossible to provide backrests with framing made of ordinary plastics material owing to the low, mechanical properties to density ratio of such materials. Any attempts of product design with such materials always resulted in either exceeding the acceptable cost or weight limit, or in falling short of the required stiffness and strength and impact strength requirements for automobile vehicle seats according to customary specifications. The use of so called technopolymers i.e. high quality polymers having high mechanical characteristics is in all cases out of consideration on account of their high cost.

GB-A-1.360.241 discloses an automobile seat construction including a load bearing structure formed by a moulded reinforced plastic seat shell, providing mutually angled base and back portions, and by a separate member attached to the seat shell and boxing the inner periphery thereof. This known load bearing structure further comprises a closed four-parts frame, and first and second steel cover members fitted over the periphery of the shell.

This construction, involving a relevant number of components some of which metallic, is both heavy and expensive to manufacture and to assemble.

Accordingly, it is an object of the invention to provide a backrest for automobile vehicle seats made from an ordinary plastics material, backrest which has bending stiffness and resistance to stresses comparable to those of metal framed backrests.

It is a further object of the invention to provide such a backrest within the same or lower weight limits as compared to those of conventional metal construction backrests.

A not unimportant object of the invention is that of providing a method of economically manufacturing such a backrest.

These and other objects and advantages, such as will be apparent hereinafter, are achieved according to the invention by a backrest for automobile vehicle seats, such are defined in claim 1. Further features of the backrest of the invention as defined in subclaims 2-8.

The invention also envisages a method of manufacturing said backrest, according to which the glass fibers and plastics material are laid in a mold defining the shape of said load bearing structure and on closing, the mold is rotated to effect a hot impregnation of the glass fibers.

A preferred embodiment of the invention will now be described by way of example and not of limitation, with reference to the accompanying drawings, where:

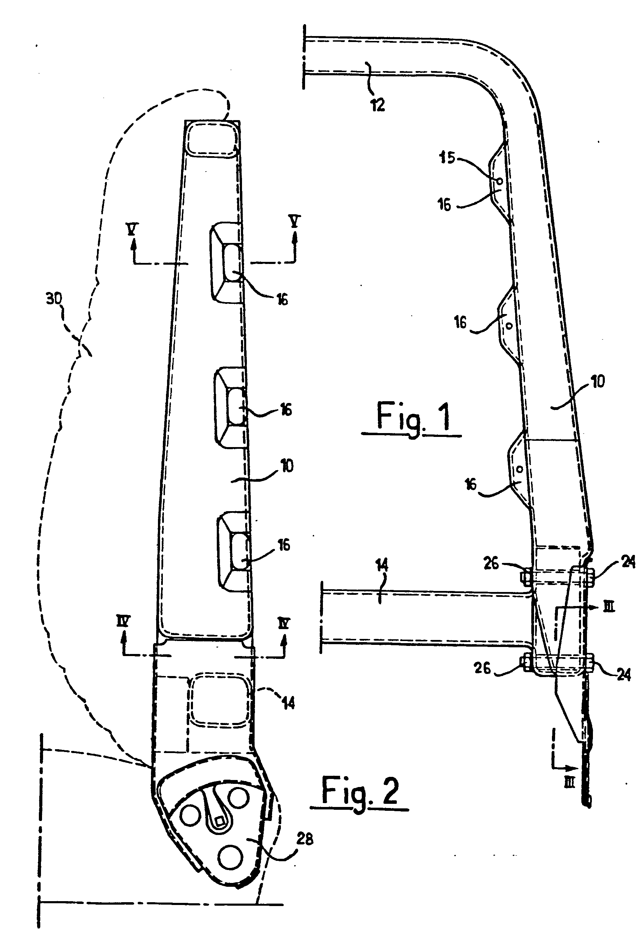

Figure 1 is a fragmentary front view of a backrest framework according to the preferred embodiment of the invention;

Figure 2 is a side view of the framework of Figure 1 with the padding shown in dotted lines;

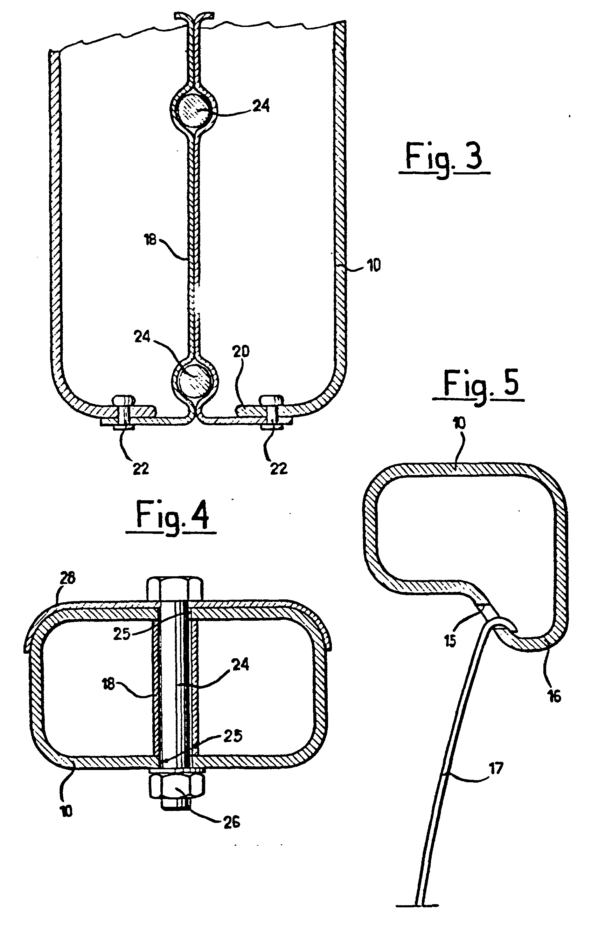

Figures 3, 4 and 5 are enlarged scale, sectional detail views taken respectively along the lines III-III, IV-IV, and V-V of Figure 1, in which some component parts are omitted for the sake of clarity.

With reference to the drawing figures, a backrest according to the preferred embodiment of the invention comprises a load bearing structure in the form of an inverted U-shape framework formed of two substantially parallel uprights 10 (one only being visible in the figures) joined at the top ends thereof by a main cross-piece 12 and close to the lower ends by a second stiffening cross-piece 14. The uprights 10 and crosspieces 12 and 14 form a single elongated hollow body of a glass fiber reinforced plastics material.

The cross-section of the uprights 10 is substantially rectangular with rounded corners, and tapers from the lower ends of the uprights toward the upper ends thereof, whereas the cross-sections of the cross-pieces 12 and 14 are substantially uniform.

The uprights 10 have bulges 16 along their inner edges formed with holes such as 15 for hooking thereto springs or spring-loaded tie rods such as 17, as is known in the art.

Preferably, the plastics material is polypropylene charged with 30% weight glass fiber. The average length of the glass fibers is preferably 10 mm to provide a high impact strength.

In order to allow the backrest to be connected strongly to the seat base, e.g. through an inclination angle adjusting mechanism (known per se), the invention envisages that the lower end of each of the uprights 10 accommodates a stiffening spacer 18, formed for example of two symmetrical metal sheets spot welded to each other. The spacer is introduced into the upright through an opening 20 and is anchored to the material by means of rivets 22. The spacer 18 has two throughgoing seats aligned with respective holes 25 in the walls of the hollow upright, for respective bolts 24 engaged by nuts 26. The bolts 24 anchor to the base of the upright an outer metal plate 28 for connection to said adjusting mechanism, which is not shown in the Figures because it does not constitute a part of the invention.

The backrest is then completed in a known way by a covering padding and hood, schematically indicated at 30.

With polypropylene, the dimensions of the upright cross-section may vary for example from a base section of $50 \times 90$ mm$^2$ to a section of $50 \times 50$ mm$^3$ at the top end, and the wall thickness is of about 3 mm. In this way, the product EJ (which qualifies the stiffness of a section) of the elasticity modulus E of the plastics material (equal to about 400 kg/mm$^3$ for 30% glass fiber reinforced polypropylene) by the moment of inertia J (equal to about 86,5 cm$^4$ for the base section of $50 \times 90$ mm$^2$ with a wall of about 3 mm) achieves a value which meets the usual requirements for automobile vehicle seats.

In lieu of polypropylene it is contemplated that other plastics may be used, such as polyamidic or polyester resins.

While the framework just described may be molded in accordance with various known techniques, such as blowing, injection molding, etc., the invention provides a preferred method, which is rapid and economical and such as to avoid subjecting the glass fibers to mechanical stresses which might break them during the process.

According to that method, molding is performed with a rotary technique. Within an open mold, there are placed preformed glass fibers together with polypropylene powder, and after closure, the mold is rotated about three orthogonal axes, while being heated, to cause the plastics material to melt and the glass fibers to become impregnated.

It has been found that the proportion and size of the glass fiber staples influence remarkably the mechanical characteristics of the final plastics material. The same applies for the orientation and distribution of the glass fiber staples within the plastics material. It has been found that the centrifugal forces, which are created during the rotation of the mold control the orientation and distribution of the fibers within the plastics material being molded. In this way, it is possible to arrange some component parts of the structure to be molded in a selected location with respect to the axis of rotation of the mold, thereby to obtain beneficial effects for these component parts.

The same procedure may also be used with a polyamidic or polyester resin, starting in this case with their oligomeric precursor, with end curing by catalysis in the mold.

It is apparent that both the shape of the backrest and method of manufacturing it are susceptible to many variations. As an example, the spring-loaded tie rods 17 (and associated bulges 16) might be replaced with a rubber band slipped over the framework. Also the stiffening spacer 18 of the upright base could be replaced with some other equivalent means.

**Claims**

1. A backrest for automobile vehicle seat, comprising a load bearing structure (10, 12) of moulded reinforced plastics material and a padded covering (30) thereon, wherein the said load bearing structure comprises two substantially parallel uprights (10) interconnected by a main cross-piece (12) at the top end thereof, characterized in that the said uprights (10) and the said main cross-piece (12) have a hollow cross-section and form a single piece tubular body of plastics material, said load bearing structure (10, 12) having a substantially inverted U-shape configuration.

2. A backrest according to claim 1, characterized in that the cross-section of said tubular body is substantially quadrangular with rounded corners.

3. A backrest according to either claims 1 or 2, characterized in that the cross-section of said uprights (10) tapers from the free ends thereof towards the cross-piece (12).

4. A backrest according to one of claims 1-3, characterized in that the load bearing structure (10, 12) also comprises at least a second stiffening cross-piece (14), also of tubular construction, extending in one piece between the two uprights (10).

5. A backrest according to one of claims 1-4, characterized in that the glass fibers have an average length of about 10mm and are contained in the plastics material in a proportion of about 30%.

6. A backrest according to one of claims 1-5, characterized in that the lower end of each upright (10) accomodates a stiffening spacer (18) formed with throughgoing seats aligned with corresponding holes (25) in the walls of the hollow uprights for the passage of backrest anchoring bolts therethrough (24).

7. A backrest according to one of claims 1-6, characterized in that said plastics material is selected among polypropylene, a polyamidic resin, a polyester resin or mixtures thereof.

8. A backrest according to one of claims 1-7, characterized in that the said uprights (10) are formed with corresponding integral bulges (16) for attachment of flexible cross-members (17) extending parallel to the said main cross-piece (12).

9. A method of manufacturing a backrest according to one of claims 1-7, wherein the plastics material is polypropylene, characterized in that the glass fibers and powder polypropylene are laid in a mold defining the shape of said load bearing structure (10, 12) and, following closure, the mold is subjected to rotation about three orthogonal axes while heat is applied to melt the polypropylene.

10. A method of manufacturing a backrest according to one of claims 1-7, wherein the plastics material is a polyamidic resin, characterized in that the glass fibers and the monomer of said resin are laid in a mold defining the shape of said load bearing structure (10, 12) and, following closure, the mold is subjected to rotation about three orthogonal axes to effect curing.

11. A method of manufacturing a backrest according to one of claims 1-7, wherein the plastics material is a polyester resin, characterized in that the preformed glass fibers and liquid polyester resin are laid in a mold defining the shape of said load bearing structure (10, 12) and, following closure, the mold is subjected to rotation about three orthogonal axes to effect curing.

**Patentansprüche**

1. Rückenlehne für Kraftfahrzeuge, umfassend ein Traggestell (10, 12) aus geformten und verstärkten Plastikmaterial sowie einen gepolsterten Überzug (30), wobei das Traggestell zwei im wesentlichen parallel zueinander verlaufende und durch einen Hauptquerträger (12) am oberen Ende miteinander verbundene Säulen (10) aufweist, dadurch gekennzeichnet, daß die Säulen (10) und der Hauptquerträger (12) einen hohlen Querschnitt besitzen sowie einen einstückigen, röhrenförmigen Körper aus Plastikmaterial bilden, wobei das Traggestell (10, 12) eine im wesentlichen auf dem Kopf stehende u-förmige Gestalt aufweist.

2. Rückenlehne nach Anspruch 1, dadurch gekennzeichnet, daß der Querschnitt des röhrenförmigen Körpers im wesentlichen viereckig mit abgerundeten Ecken ist.

3. Rückenlehne nach Anspruch 1 oder 2, dadurch gekennzeichnet, daß sich der Querschnitt der Säulen (10) von deren freien Enden in Richtung auf den Querträger (12) verjüngt.

4. Rückenlehne nach einem der Ansprüche 1—3, dadurch gekennzeichnet, daß das Traggestell (10, 12) ferner wenigstens ein zweites Versteifungsquerstück (14) von ebenfalls röhrenförmigen Aufbau umfaßt, das sich in einem Stück zwischen den zwei Säulen (10) erstreckt.

5. Rückenlehne nach einem der Ansprüche 1-4, dadurch gekennzeichnet, daß die Glasfasern eine durchschnittliche Länge von über 10 mm aufweisen und in dem Plastikmaterial mit einem Anteil von über 30% enthalten sind.

6. Rückenlehne nach einem der Ansprüche 1-5, dadurch gekennzeichnet, daß das untere Ende jeder Säule (10) einen versteifenden Abstandshalter (18) aufnimmt, der mit durchgehenden Sitzen geformt ist, die mit entsprechenden Durchbrechungen (25) in den Wänden der hohlen Säulen zum Durchgang der Verankerungsbolzen (24) fluchten.

7. Rückenlehne nach einem der Ansprüche 1-6, dadurch gekennzeichnet, daß das Plastikmaterial unter Polypropylen, einem Polyamidharz, einem Polyesterharz oder einer Mischung daraus ausgewählt wird.

8. Rückenlehne nach einem der Ansprüche 1-7, dadurch gekennzeichnet, daß die Säulen (10) mit entsprechend angeformten Ausbauchungen (16) zur Befestigung von flexiblen Querelementen (17) gebildet sind, die sich parallel zu dem Hauptquerträger (12) erstrecken.

9. Verfahren zur Herstellung einer Rückenlehne nach einem der Ansprüche 1-7, wobei das Plastikmaterial Polypropylen ist, dadurch gekennzeichnet, daß die Glasfasern und das Polypropylenpulver in eine Form gegeben werden, die die Gestalt des Traggestells (10, 12) definiert, und daß nach dem anschließenden Schließen die Form um drei orthogonale Achsen geschleudert wird, während Hitze zum Schmelzen des Polypropylens zugeführt wird.

10. Verfahren zur Herstellung einer Rückenlehne nach einem der Ansprüche 1-7, wobei das Plastikmaterial ein Polyamidharz ist, dadurch gekennzeichnet, daß die Glasfasern und Monomere des Harzes in eine Form gegeben werden, die die Gestalt des Traggestells (10, 12) definiert, und daß nach dem anschließenden Schließen die Form um drei orthogonale Achsen geschleudert wird, um die Härtung zu bewirken.

11. Verfahren zur Herstellung einer Rückenlehne nach einem der Ansprüche 1—7, wobei das Plastikmaterial ein Polyesterharz ist, dadurch gekennzeichnet, daß die vorgeformten Glasfasern und das flüssige Polyesterharz in eine Form gegeben werden, die die Gestalt des Traggestells (10, 12) definiert, und daß nach dem anschließenden Schließen die Form um drei orthogonale Achsen geschleudert wird, um die Härtung zu bewirken.

**Revendications**

1. Dossier pour siège de véhicule automobile, comprenant une structure résistante (10, 12) en matière plastique renforcée moulée et un revêtement rembourré (30) sur cette structure, dans lequel ladite structure résistante comprend deux montants (10) sensiblement parallèles reliés par une traverse principale (12) à leur extrémité supérieure, caractérisé en ce que lesdits montants (10) et ladite traverse principale (12) ont une section creuse et forment un corps tubulaire en matière plastique d'une seule pièce, ladite structure résistante (10, 12) ayant une configuration sensiblement en U inversé.

2. Dossier selon la revendication 1, caractérisé en ce que la section transversale dudit corps tubulaire est sensiblement quadrangulaire à angles arrondis.

3. Dossier selon une quelconque des revendications 1 et 2, caractérisé en ce que la section transversale desdits montants (10) décroît des extrémités libres de ces montants vers la traverse (12).

4. Dossier selon une quelconque des revendications 1 à 3, caractérisé en ce que la structure résistante (10, 12) comprend en outre au moins une deuxième traverse raidisseuse (14), elle aussi de construction tubulaire, qui s'étend en une seule pièce entre les deux montants (10).

5. Dossier selon une quelconque des revendications 1 à 4, caractérisé en ce que les fibres de verre ont une longueur moyenne d'environ 10 mm et sont contenues dans la matière plastique dans une proportion d'environ 30%.

6. Dossier selon une quelconque des revendications 1 à 5, caractérisé en ce que l'extrémité inférieure de chaque montant (10) renferme une entretoise raidisseuse (18) munie de logements traversants qui sont alignés sur des trous correspondants (25) des parois des montants creux pour donner passage à des vis d'ancrage du dossier (24) à travers ces logements et ces trous.

7. Dossier selon une quelconque des revendications 1 à 6, caractérisé en ce que ladite matière plastique est choisie parmi le polypropylène, une résine polyamide, une résine polyester ou les mélanges de ces matières.

8. Dossier selon une quelconque des revendications 1 à 7, caractérisé en ce que lesdits montants (10) sont munis de bossages correspondants (16) venus de matière avec eux et destinés à fixer des éléments transversaux flexibles (17) qui s'étendent parallèlement à ladite traverse principale (12).

9. Procédé de fabrication d'un dossier selon une quelconque des revendications 1 à 7, dans lequel la matière plastique est le polypropylène, caractérisé en ce qu'on dépose les fibres de verre et le polypropylène en poudre dans un moule définissant la forme de ladite structure résistante (10, 12) et, après avoir fermé le moule, on soumet ce dernier à une rotation autour de trois axes orthogonaux en même temps qu'on chauffe pour faire fondre le polypropylène.

10. Procédé de fabrication d'un dossier selon une quelconque des revendications 1 à 7, dans lequel la matière plastique est une résine polyamide, caractérisé en ce qu'on dépose les fibres de verre et le monomère de ladite résine dans un moule définissant la forme de ladite structure résistante (10, 12) et, après la fermeture du moule, on soumet ce dernier à une rotation autour de trois axes orthogonaux pour provoquer la polymérisation.

11. Procédé de fabrication d'un dossier selon une quelconque des revendications 1 à 7, dans lequel la matière plastique est une résine polyester, caractérisé en ce qu'on dépose les fibres de verre préformées et la résine polyester liquide dans un moule définissant la forme de ladite structure résistante (10, 12) et, après avoir fermé le moule, on soumet ce dernier à une rotation autour de trois axes orthogonaux pour effectuer la polymérisation.

Fig. 1

Fig. 2

_Fig. 3_

_Fig.4_

_Fig. 5_